# DEMANDE DE BREVET EUROPEEN

(11) **EP 2 127 977 A1**
(43) Date de publication de la demande: **02.12.2009**
(21) Numéro de dépôt: 09161299.4
(22) Date de dépôt: 27.05.2009
(51) Int. Cl.: B60T 8/40, B60T 13/74

(54) **Système de contrôle de stabilité et de trajectoire d'un véhicule automobile utilisant un servofrein actif**

(30) Priorité: 28.05.2008 FR 0853463
(71) Demandeur: PEUGEOT CITROËN AUTOMOBILES S.A., 78140 Vélizy Villacoublay (FR)
(72) Inventeur: Zink, Eric, 92700, COLOMBES (FR); Blanc, Fabrice, 38080, L'ISLE D'ABEAU (FR)

(57) **Abrégé**

Système de contrôle de stabilité et de trajectoire d'un véhicule automobile dépourvu de vannes d'échappement, apte à moduler individuellement la pression hydraulique alimentant chacun de quatre éléments de frein (7a,7b,7c,7d) associés aux quatre roues d'un véhicule automobile et comprenant :
- un maître cylindre tandem (3) alimentant individuellement deux circuits de freinage, chaque circuit de freinage comprenant un accumulateur (4a, 4b) haute pression alimentant deux éléments de frein ;
- un servofrein (2) destiné à agir sur le maître cylindre (3), apte à augmenter un effort reçu de la pédale de commande de frein (1) et à générer un effort en l'absence d'action sur la pédale (1) de commande ;
- une électrovanne (6a, 6b, 6c, 6d) d'isolement normalement ouverte associée à chacun des éléments de frein ;
- une pompe hydraulique (9a, 9b, 9c, 9d) associée à chacun des éléments de frein ;

le système étant apte à diminuer la pression individuellement dans un ou plusieurs éléments de frein (7a, 7b, 7c, 7d) par actionnement de la (des) électrovanne(s) d'isolement (6a, 6b, 6c, 6d) associée(s) à (aux) l'élément(s) de frein concerné(s) conjointement à l'actionnement de la (des) pompes(s) (9a, 8b, 9c, 9d) concernée(s).

## Description

La présente invention est relative à un système de contrôle de stabilité et de trajectoire pour un véhicule automobile.

Un système de contrôle de stabilité et de trajectoire, connu notamment sous le nom d'E.S.P., a pour objectif d'augmenter ou de générer le couple de freinage appliqué à une roue si une unité de contrôle électronique en charge de la commande du système détecte qu'une consigne conducteur est inexistante, insuffisante ou au contraire trop importante, au regard d'une situation de stabilité du véhicule, cette situation étant déterminée à partir de mesures effectuées par différents capteurs installés dans le véhicule.

L'action principale d'un système de contrôle de stabilité consiste donc à augmenter ou générer un couple de freinage si la consigne du conducteur appliquée à la pédale de frein est insuffisante ou inexistante

Parallèlement, il est également connu des systèmes d'anti-blocage des roues lors d'un freinage (couramment appelé A.B.S). Le système A.B.S. permet de conserver la dirigeabilité du véhicule en situation de freinage d'urgence ou sur revêtement à faible adhérence. A cet effet, un capteur de vitesse est disposé au niveau de chaque roue. A partir de ces mesures de vitesse, un calculateur évalue le glissement relatif de chaque roue et régule la puissance du freinage sur chacune des roues de façon à empêcher le blocage de l'une d'entre elles.

Les moyens de calcul et de régulation du système de contrôle de stabilité et de trajectoire sont en outre couramment employés afin de réaliser un système d'anti-patinage (couramment appelé A.S.R.).

Les systèmes de contrôle de stabilité et de motricité existants sont des systèmes hydrauliques se greffant sur le (les) circuit(s) de freinage du véhicule, et, le cas échéant, constituent un système unique assurant les fonctions de contrôle de stabilité, d'antiblocage et d'anti-patinage.

De tels systèmes équipent aujourd'hui couramment les véhicules de moyenne et haute gammes, mais, en raison d'un surcoût important, sont encore peu installés sur les véhicules d'entrée de gamme, en dépit de leur apport incontestable en terme de sécurité.

Atténuer l'impact économique de l'intégration d'un système de contrôle de stabilité dans un véhicule automobile constitue ainsi un enjeu primordial pour les constructeurs automobiles.

Le surcoût important de ces systèmes est, pour la plus grande part, dû à la partie opérative, comprenant des composants hydrauliques dont l'intégration s'avère coûteuse et complexe, comme expliqué ci-après.

Le système de freinage d'un véhicule dépourvu de système de régulation comporte, de manière connue, un circuit hydraulique permettant d'actionner des étiers de frein équipant chacun des disques de frein dont est pourvue chacune des roues (éventuellement remplacés par un ensemble tambour/mâchoire). Le circuit hydraulique est mis en pression lorsque le conducteur exerce un effort sur la pédale de frein au moyen d'un maître-cylindre alimenté par un réservoir de fluide. Les exigences règlementaires de sécurité imposent de prévoir deux circuits de freinage indépendants, chaque circuit assurant le freinage de deux roues, par exemple, une roue avant et une roue arrière de côté opposé. On utilise à cet effet un maître-cylindre dit « tandem », comportant deux chambres de compression alimentant chacune un des deux circuits. Entre le maître-cylindre et la pédale est interposé un dispositif d'amplification, le servofrein (aussi connu sous le nom de « booster »).

L'implantation d'un système de contrôle de stabilité et de trajectoire sur un tel système de freinage impose généralement la présence sur chacun des deux circuits de freinage d'une pompe, d'une électrovanne, ouverte en position de repos, permettant d'isoler le maître-cylindre tandem du circuit hydraulique, d'une électrovanne d'aspiration, fermée en position de repos, installée entre le maître-cylindre tandem et la pompe (côté admission), d'électrovannes d'admission et d'échappement pour chacun des étriers, ainsi que d'un accumulateur basse pression.

L'un des éléments les plus coûteux de cet ensemble est la pompe hydraulique et il est connu du document DE10338046 d'utiliser un servofrein « actif » afin d'effectuer les régulations nécessaires en cas d'action insuffisante ou inexistante de la part du conducteur (ESP, ASR...). Le terme de servofrein actif est utilisé ici par opposition au servofrein classique, décrit plus haut, qui est uniquement apte à amplifier un effort non nul, mais ne peut en aucun cas générer un effort si le conducteur n'appuie pas sur la pédale. Le système décrit dans ce document conserve un bloc hydraulique conventionnel, c'est-à-dire comprenant au moins une pompe hydraulique, pour toutes les actions nécessitant de diminuer l'effort imposé par le conducteur, et donc la pression dans le circuit hydraulique (i.e. pour l'ABS).

Les systèmes du type décrit ci-dessus présentent l'inconvénient de nécessiter de nombreux composants hydrauliques dont l'intégration dans un bloc peut s'avérer compliquée et coûteuse. De plus, la multiplication sur les véhicules actuels et futurs d'organes utilisant une dépression comme source d'énergie (vanne EGR, etc.) implique généralement l'installation d'une source de vide additionnelle (pompe à vide) afin de garantir un niveau de dépression suffisant pour le booster du circuit de freinage.

La présente invention a pour objet de pallier les inconvénients de l'art antérieur en proposant un système et un procédé de contrôle de la stabilité, de la trajectoire et de l'adhérence d'un véhicule mettant en oeuvre un circuit hydraulique simplifié réduisant les coûts de fabrication et d'intégration.

Ainsi, l'invention concerne un système de contrôle de stabilité et de trajectoire d'un véhicule automobile, apte à moduler individuellement la pression hydraulique alimentant chacun de quatre éléments de frein associés aux quatre roues d'un véhicule automobile et comprenant :
- un maître cylindre tandem alimentant individuellement deux circuits deux freinage, chaque circuit de freinage alimentant deux éléments de frein ;
- un servofrein destiné à agir sur le maître cylindre, apte à augmenter un effort reçu de la pédale de commande de frein et à générer un effort en l'absence d'action sur la pédale de commande ;
- une électrovanne d'isolement normalement ouverte associée à chacun des éléments de frein ;
- une pompe hydraulique associée à chacun des éléments de frein ;

le système étant apte à diminuer la pression individuellement dans un ou plusieurs éléments de frein par actionnement de la (des) électrovanne(s) d'isolement associée(s) à (aux) l'élément(s) de frein concerné(s) conjointement à l'actionnement de la(des) pompe(s) concernée(s).

Ainsi, grâce à l'invention, on se dispense de huit électrovannes par rapport à l'état de la technique. De plus, le circuit de vide est simplifié, réduisant ainsi les exigences sur la source de vide. Par ailleurs, les phases de réduction de pression étant réalisées par l'utilisation conjointe des pompes et des électrovannes d'isolement, les exigences dynamiques sur le booster mécanique sont réduites, et le contrôle du système peut être simplifié.

Selon une réalisation, le système, permettant de réaliser une fonction d'antiblocage des roues, est apte à détecter le risque de blocage d'une ou plusieurs roues lors d'un freinage, à isoler la(les) roue(s) bloquées au moyen de la(des) électrovanne(s) d'isolement associée(s), puis à actionner la(les) pompe(s) associé(s) pour débloquer la(les) roue(s).

Selon une réalisation, chaque pompe dispose de moyens d'entraînement propres.

Selon une réalisation, l'ensemble des pompes dispose de moyens d'entraînements communs.

Selon une réalisation, le système comprend des moyens pour accoupler et désaccoupler chaque pompe aux/des moyens d'entraînement.

Selon une réalisation, les pompes sont des pompes à cylindrée variable.

Selon une réalisation, le système, permettant de réaliser une fonction de contrôle de stabilité et de trajectoire, est apte à générer un effort de freinage individuellement dans une ou plusieurs roue(s) en isolant les autres roues en activant les électrovannes d'isolement associées puis à activer le servofrein pour générer un effort de freinage et ralentir la rotation de la (les) roue(s).

Selon une réalisation, le servofrein est un actionneur électromécanique réversible.

Selon une réalisation, le servofrein est un actionneur électromécanique irréversible, le servofrein étant lié à la pédale par un mécanisme d'accouplement.

Selon une réalisation, au moins une des électrovannes est une électrovanne de type proportionnel.

Selon une réalisation, au moins l'un des deux circuits de freinage comporte un capteur de pression hydraulique.

Selon une réalisation, le système comprend un capteur d'effort associé à la pédale de commande de frein.

Selon une réalisation, le système comprend un capteur de position associé à la pédale de commande de frein.

Selon une réalisation, chaque circuit de freinage comprend un accumulateur haute pression.

Selon une réalisation, le système comprend un simulateur de course et d'effort relié à la pédale de frein.

L'invention concerne en outre un procédé mettant en oeuvre le système de freinage selon l'invention, comprenant les étapes de :
- surveiller les vitesses de rotation des roues ;
- lorsqu'une roue se bloque, activer l'électrovanne d'isolement associée ;
- activer la pompe associée jusqu'à ce que la roue bloquée se débloque ; puis désactiver l'électrovanne d'isolement associée ; Selon une mise en oeuvre, le procédé comprend les étapes de :

- lorsqu'un écart survient entre les trajectoires réelle et souhaitée, déterminer une roue devant être freinée pour diminuer cet écart, ainsi que l'effort de freinage à appliquer à cette roue ;
- activer les électrovannes d'isolement des autres roues ;
- activer le servofrein pour générer l'effort de freinage nécessaire sur la roue ;
- lorsque l'écart entre les trajectoires réelle et souhaitée est corrigé, désactiver le servofrein ;
- désactiver les électrovannes d'isolement des roues non freinées.

L'invention concerne également un véhicule automobile pourvu d'un système selon l'invention.

L'invention concerne enfin un véhicule automobile mettant en oeuvre le procédé selon l'invention.

Un exemple de réalisation de l'invention est décrit ci-après, de manière non limitative, en relation avec les figures annexées, parmi lesquelles :
- la figure 1 montre un schéma d'un système selon l'invention;
- les figures 2 et 3 montrent l'état du système de la figure 1, respectivement lors de phases classiques de freinage et de défreinage;
- la figure 4 montre l'état du système de la figure 1 lors d'une phase de freinage nécessitant la mise en oeuvre de la fonction d'antiblocage ;
- la figure 5 montre deux des pompes du système disposant de moyens d'entraînement commun ;

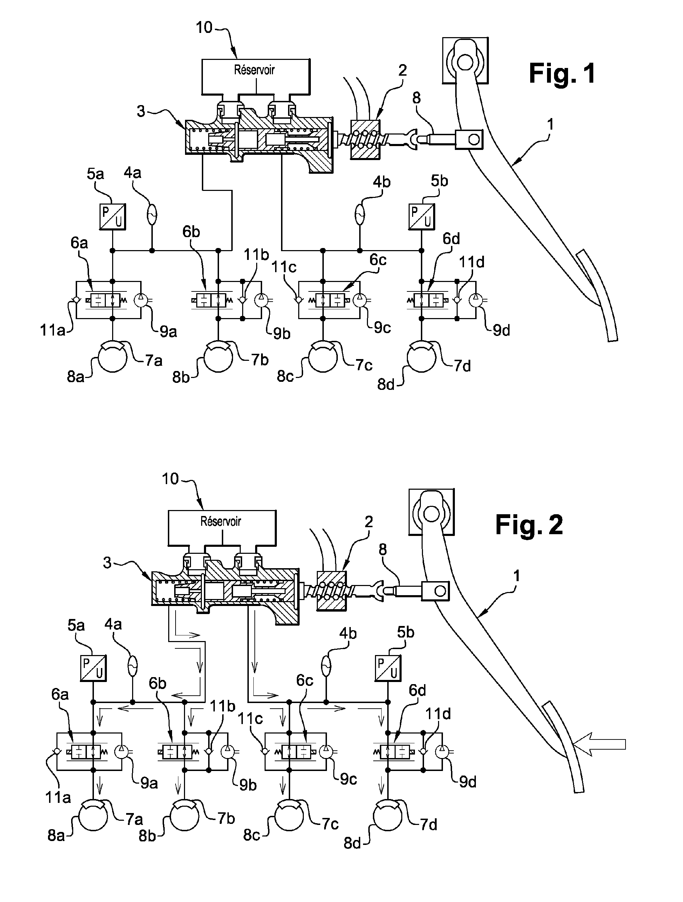

La figure 1 représente un schéma de principe d'un système selon l'invention. Un maître cylindre tandem 3 relié à un réservoir 10 de fluide hydraulique permet d'alimenter deux circuits de freinage indépendants et identiques. Chacun des circuits de freinage est associé à deux des quatre roues représentées ici par leur de disque de frein 8a, 8b, 8c, 8d et permet d'actionner deux étriers des quatre étriers respectifs 7a, 7b, 7c, 7d. A chaque étrier est associée une électrovanne d'isolement normalement ouverte, dans l'exemple quatre électrovannes proportionnelles 6a, 6b, 6c, 6d ainsi qu'à une pompe 9a, 9b, 9c, 9d montée en dérivation avec l'électrovanne correspondante. En parallèle de chaque pompe est disposée un clapet anti-retour 11 a, 11 b, 11 c, 11d. Au moins l'un des circuits de freinage est en outre équipé d'un capteur de pression. Dans l'exemple de la figure 1, chaque circuit comporte un capteur de pression 5a, 5b propre.

Dans des variantes de réalisation, les électrovannes 6a, 6b, 6c, 6d peuvent être de type tout-ou-rien. Une électrovanne tout ou rien est caractérisée par deux états, un état de repos (qui peut être ouvert ou fermé), et un état d'activation (qui est l'état contraire).

Une électrovanne proportionnelle comporte une infinité d'états entre un état de repos et un état d'activation complète, ce qui permet de procéder à une ouverture et une fermeture progressives.

Il peut également s'agir d'électrovanne « débit », c'est-à-dire permettant de contrôler un débit, ou d'électrovanne « pression », c'est-à-dire permettant de contrôler la différence de pressions appliquée à cette électrovanne.

Le maître cylindre 3 est actionné par un servofrein actif réversible 2 relié à une pédale de frein 1. Le servofrein 2 est un actionneur électromécanique réversible qui permet d'amplifier l'effort reçu de la pédale de frein 1, comme un servofrein classique, mais peut également générer seul un effort en l'absence d'action sur la pédale de frein de la part du conducteur. L'effort reçu de la pédale est mesuré grâce à un capteur d'effort 8. Par réversible, on entend que l'actionneur ne s'oppose pas au mouvement de la pédale de frein lorsque celui-ci n'est pas alimenté. En variante, on peut envisager l'utilisation d'un actionneur irréversible en combinaison avec un système d'accouplement débrayable, afin que, pour des raisons de sécurité il soit toujours possible de freiner, notamment lorsque l'actionneur tombe en panne.

On décrit ci-après le fonctionnement du système selon l'invention à travers les phases de freinage et défreinage classiques, ainsi qu'à travers des phases de régulation du système de contrôle de stabilité et de trajectoire.

Ainsi, la figure 2 montre les mouvements de fluide hydraulique dans le circuit lors d'un freinage classique. Lorsque le conducteur appuie sur la pédale 1, le servofrein 2 amplifie cet effort et transmet l'effort résultant au maître cylindre 3. La pression générée par le maître cylindre 3 est transmise par les électrovannes 6a, 6b, 6c, 6d normalement ouvertes aux étriers 7a, 7b, 7c, 7d. De manière classique, la pression reçue par les étriers est convertie en effort de freinage. Les pompes 9a, 9b, 9c, 9d sont inactives.

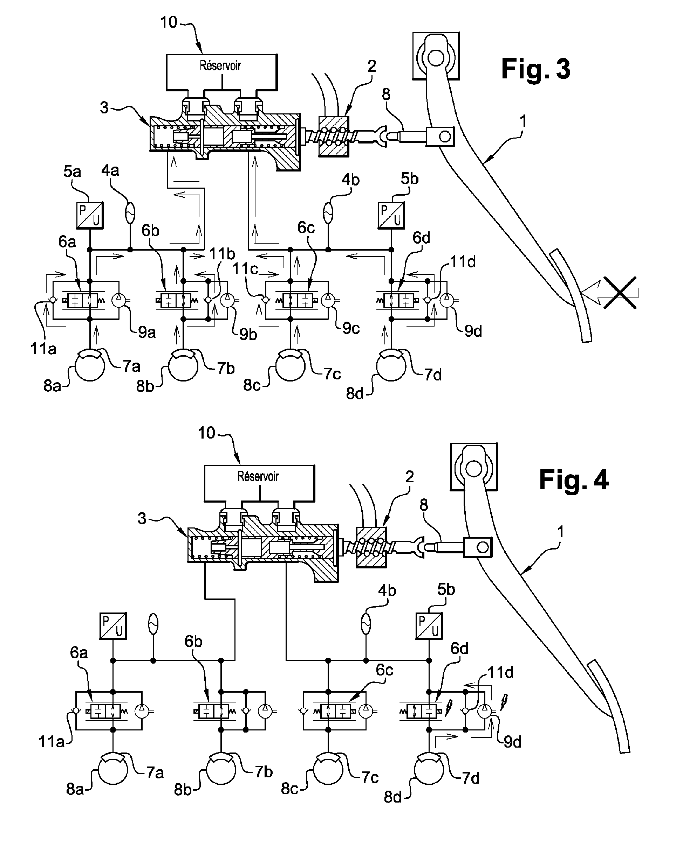

La figure 3 montre l'état du circuit lors d'une phase de défreinage, c'est-à-dire lorsque le conducteur relâche la pédale de frein à l'issue d'une phase de freinage. A cet instant, le fluide contenu sous pression dans les étriers 7a, 7b, 7c, 7d reflue vers le maître cylindre 3 à travers les électrovannes 6a, 6b, 6c, 6d qui sont passantes, ainsi qu'à travers les clapets 11 a, 11 b, 11 c, 11 d.

La figure 4 montre le circuit lors d'une phase de régulation du système selon l'invention, dans laquelle il est nécessaire de faire chuter la pression dans un seul étrier, par exemple lorsqu'une roue se bloque lors d'une phase de freinage. Lorsqu'un risque de blocage d'une roue est détecté dans l'exemple de la figure 4, la roue correspondant au disque 8d et son étrier associé 7d, l'électrovanne d'isolement 6d associée à cette roue est activée et devient non passante. La pression dans l'étrier 7d est maintenue constante tant que l'électrovanne n'est pas désactivée. Si la pression est encore trop élevée, la pompe 9d est activée, ce qui permet d'évacuer du fluide de l'étrier 7d vers le maître-cylindre 3, faisant ainsi chuter la pression dans l'étrier. La pression cible peut être atteinte en contrôlant l'activation de la pompe 9d et/ou en utilisant une électrovanne de type pression comme électrovanne d'isolement 6d. Une fois que la roue 8d est débloquée, l'électrovanne d'isolement 6d associée est désactivée. Lors de cette hase de régulation, le fonctionnement de la pompe 9d provoque une augmentation de la pression au niveau du maître-cylindre du circuit hydraulique concerné. La présence d'un accumulateur 4a, 4b sur chacun des circuits hydrauliques permet de réduire, voire d'annuler cette augmentation de pression.

L'information issue du capteur d'effort 8 permet de conserver la cohérence entre les pressions régulées par le servofrein 2 et la consigne du conducteur. Un « programme de surveillance » estime quelle pression de consigne correspond au souhait du conducteur à partir de l'effort mesuré par le capteur 8, et s'assure par exemple qu'en dehors des phases de fonctionnement nécessitant une pression de freinage indépendamment de l'action du conducteur les pressions des étriers ne dépassent pas cette pression de consigne.

La volonté du conducteur peut également être estimée en utilisant la pression mesurée par les capteurs de pression 5a, 5b et en connaissant le rapport d'assistance que fournit le servofrein 2.

On décrit ci-après une phase de régulation nécessitant une pression de freinage sans action du conducteur, ou avec une action du conducteur insuffisante. Cela correspond notamment à des phases d'actionnement de l'ESP. Dans ce cas, si la pression mesurée par les capteurs 5a, 5b est inférieure à la pression requise, le servofrein 2 est activé et génère ainsi directement la pression requise. Cette pression est alors appliquée sélectivement à une ou plusieurs roues, les électrovannes d'isolement des roues ne devant pas être freinées étant alors activées. Si, lors de cette phase, le conducteur appuie finalement sur la pédale de frein ou augmente suffisamment la pression qu'il exerçait, l'effort que le conducteur exerce sur la pédale s'ajoute alors à l'effort déjà fourni par le servofrein 2.

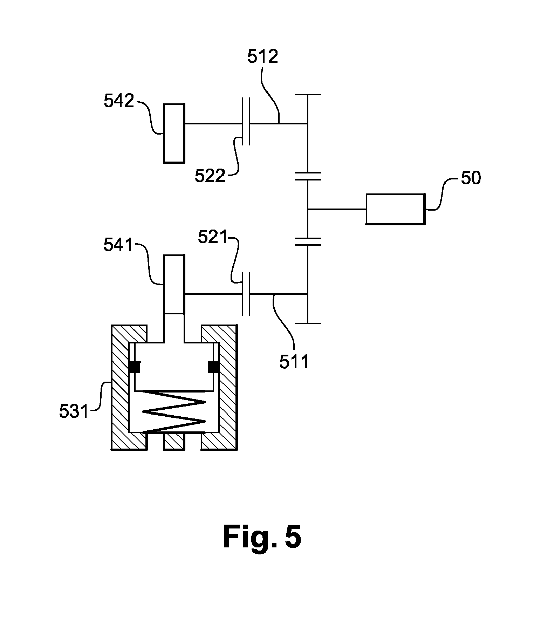

Les pompes 9a, 9b, 9c, 9d associées à chacun des étriers 7a, 7b, 7c, 7d peuvent disposer de moyens d'entraînement propres ou commun : on pourra ainsi disposer d'un moteur par pompe, par groupe de deux pompes, ou encore pour l'ensemble des quatre pompes. Dans les deux derniers cas, les pompes peuvent être avantageusement des pompes à cylindrée variable. Dans le cas contraire, il est alors nécessaire de prévoir des moyens d'accouplement/désaccouplement d'avec les moyens d'entraînement communs. La figure 5 montre un mode de réalisation de ces moyens d'accouplement. Dans cet exemple, un moteur 50 entraîne par l'intermédiaire d'engrenages deux arbres 511, 512. Ceux-ci sont aptes à entraîner deux pompes (une seule pompe 531 étant toutefois représentée) via deux mécanismes d'accouplement 521, 522 respectivement. Dans l'exemple, les pompes sont des pompes à piston entraînées par des excentriques 541, 542.

Dans une variante, le système comprend un capteur de déplacement associé à la pédale de frein 1. Ainsi l'information sur la position de la pédale, ou la dérivée temporelle de celle-ci permet de réaliser des fonctions supplémentaires en faisant varier la loi d'assistance qui est assurée par le servofrein 2. Par exemple, on peut réaliser la fonction d'aide au freinage d'urgence, dans laquelle on détecte un enfoncement très brusque de la pédale de frein et l'on augmente l'effort d'assistance du servofrein 2 par rapport à l'effort d'assistance nominal. En l'absence de capteur de déplacement, on peut cependant utiliser comme information le gradient de la force appliquée par le conducteur sur la pédale de frein 1 pour réaliser la fonction d'aide au freinage d'urgence.

Dans une variante, la pédale de frein est reliée à un simulateur de course et d'effort comme il en a été développé pour les systèmes de freinage des véhicules hybrides par exemple. L'utilisation d'un tel simulateur permettrait d'améliorer le ressenti à la pédale du conducteur lors des phases de régulation de pression par l'intermédiaire du servofrein.

Dans les modes de réalisation décrits, les éléments de frein sont des freins à disque. Toutefois, ces éléments de frein pourraient en variante être remplacés par des freins à tambour.

## Revendications

1. Système de contrôle de stabilité et de trajectoire d'un véhicule automobile dépourvu de vannes d'admission et d'échappement, apte à moduler individuellement la pression hydraulique alimentant chacun de quatre éléments de frein (7a, 7b, 7c, 7d) associés aux quatre roues d'un véhicule automobile et comprenant :
- un maître cylindre tandem (3) alimentant individuellement deux circuits de freinage, chaque circuit de freinage comprenant un accumulateur (4a, 4b) haute pression alimentant deux éléments de frein ;
- un servofrein (2) destiné à agir sur le maître cylindre (3), apte à augmenter un effort reçu de la pédale de commande de frein (1) et à générer un effort en l'absence d'action sur la pédale (1) de commande ;
- une électrovanne (6a, 6b, 6c, 6d) d'isolement normalement ouverte associée à chacun des éléments de frein ;
- une pompe hydraulique (9a, 9b, 9c, 9d) associée à chacun des éléments de frein ;
le système étant apte à diminuer la pression individuellement dans un ou plusieurs éléments de frein (7a, 7b, 7c, 7d) par actionnement de la (des) électrovanne(s) d'isolement (6a, 6b, 6c, 6d) associée(s) à (aux) l'élément(s) de frein concerné(s) conjointement à l'actionnement de la (des) pompes(s) (9a, 8b, 9c, 9d) concernée(s).

2. Système selon la revendication 1, permettant de réaliser une fonction d'antiblocage des roues (8a, 8b, 8c, 8d), le système étant apte à détecter le risque de blocage d'une ou plusieurs roues (8a) lors d'un freinage, à isoler la(les) roue(s) (8b, 8c, 8d) bloquée(s) au moyen de la(des) électrovanne(s) d'isolement associée(s) (6a), puis à actionner la(les) pompe(s) associée(s) (9a) pour débloquer la(les) roue(s) (8a).

3. Système selon la revendication 1 ou 2, dans lequel chaque pompe (9a, 9b, 9c, 9d) dispose de moyens d'entraînement propre.

4. Système selon la revendication 1 ou 2, dans lequel l'ensemble des pompes (9a, 9b, 9c, 9d) dispose de moyens d'entraînement communs.

5. Système selon la revendication 4, comprenant des moyens pour accoupler et désaccoupler chaque pompe (9a, 9b, 9c, 9d) aux/des moyens d'entraînement.

6. Système selon la revendication 4, dans lequel les pompes (9a, 9b, 9c, 9d) sont des pompes à cylindrée variable.

7. Système selon l'une des revendications 1 à 6, permettant de réaliser une fonction de contrôle de stabilité et de trajectoire, le système étant apte à générer un effort de freinage individuellement dans une ou plusieurs roue(s) en isolant les autres roues (8b, 8c, 8d) en activant les électrovannes d'isolement associées (6b, 6c, 6d) puis à activer le servofrein (2) pour générer un effort de freinage et ralentir la rotation de la (les) roue(s) (8a).

8. Système selon l'une des revendications 1 à 7, dans lequel le servofrein (2) est un actionneur électromécanique réversible.

9. Système selon l'une des revendications 1 à 8, dans lequel au moins une des électrovannes (6a, 6b, 6c, 6d) est une électrovanne de type proportionnel.

10. Système selon l'une des revendications 1 à 9, dans lequel au moins l'un des deux circuits de freinage comporte un capteur de pression hydraulique (5a, 5b).

11. Système selon l'une des revendications 1 à 10, comprenant un capteur d'effort (8) associé à la pédale de commande de frein (1).

12. Système selon l'une des revendications 1 à 11, comprenant un capteur de position associé à la pédale de commande de frein (1).

13. Système selon l'une des revendications 1 à 12, comprenant un simulateur de course et d'effort relié à la pédale de frein

14. Procédé mettant en oeuvre le système selon l'une des revendications 1 à 12, comprenant les étapes de :
- surveiller les vitesses de rotation des roues (8a, 8b, 8c, 8d) ;
- lorsqu'une roue (8a) se bloque, activer l'électrovanne d'isolement (6a) associée ;
- activer la pompe (9a) associée jusqu'à ce que la roue bloquée (8a) se débloque ; puis désactiver l'électrovanne d'isolement (6a) associée ;

15. Procédé selon la revendication 14, comprenant les étapes de :
- lorsqu'un écart survient entre les trajectoires réelle et souhaitée, déterminer une roue (8a) devant être freinée pour diminuer cet écart, ainsi que l'effort de freinage à appliquer à cette roue (8a) ;
- activer les électrovannes d'isolement (6b, 6c, 6d) des autres roues (8b, 8c, 8d) ;
- activer le servofrein (2) pour générer l'effort de freinage nécessaire sur la roue (8a) ;
- lorsque l'écart entre les trajectoires réelle et souhaitée est corrigé, désactiver le servofrein (2) ;
- désactiver les électrovannes d'isolement (6b, 6c, 6d) des roues non freinées (8b, 8c, 8d).

16. Véhicule automobile pourvu d'un système selon l'une des revendications 1 à 13.

17. Véhicule automobile mettant en oeuvre le procédé selon la revendication 14 ou 15.
